# EUROPÄISCHE PATENTSCHRIFT

(11) **EP 2 303 735 B1**
(45) Veröffentlichungstag und Bekanntmachung des Hinweises auf die Patenterteilung: **06.03.2013**
(21) Anmeldenummer: 09781222.6
(22) Anmeldetag: 29.07.2009
(51) Int. Cl.: B65G 47/96

(54) **KIPPSCHALEN-SORTIERFÖRDERER**
TILT TRAY SORTER CONVEYOR
CONVOYEUR DE TRI À BENNES BASCULANTES

(30) Priorität: 30.07.2008 DE 102008035690
(43) Veröffentlichungstag der Anmeldung: 06.04.2011
(73) Patentinhaber: Siemens Aktiengesellschaft, 80333 München (DE)
(72) Erfinder: VITALINI, Michele, 90475 Nürnberg (DE)
(86) Internationale Anmeldenummer: PCT/EP2009/059783
(87) Internationale Veröffentlichungsnummer: WO 2010/012755

(56) Entgegenhaltungen:
- EP-A- 0 425 021
- EP-A- 1 411 008
- WO-A-01/46045
- WO-A-02/057161
- CH-A5- 678 518

## Beschreibung

Die Erfindung betrifft eine Kippschalen-Sortiervorrichtung für Stückgüter entsprechend dem Anspruch 1.

Zum Transport und Vereinzeln von Stückgut haben sich seit langem so genannte Kippschalensorter bewährt. Das Fördergut wird dabei von spurgeführten Fahrzeugen aufgenommen, die an ihrer Oberseite als Tragschalen ausgebildete Ladungsträger aufweisen, die zum Ladungstransport waagerecht gehalten und zum Ladungsabwurf kippbar sind.

Aus der DE 40 90 308 Tl ist ein derartiger Kippschalenförderer bekannt, bei dem ein Kippen der Tragschalen durch eine mit der kippbaren Tragschale verbundene Nockenstößelrolle ermöglicht wird. Obgleich die Rollen in entsprechenden Führungen gleiten, besteht doch ein hoher Widerstand für die Rollen, der die Mechanik entsprechend hoch beansprucht. Diese Lösung kann daher allenfalls für kleinere Fördergutstücke eingesetzt werden, deren Gewicht einige Kilogramm nicht übersteigt. Zudem sind die Kippschalenförderer dieser Bauart sehr kompliziert, da zur Einleitung der Kippbewegung der Tragschalen aufwändige Hebel und Gestänge erforderlich sind, die mit ebensolchen aufwändigen Schienen und Führungen am Fahrweg des Förderers im Kippbereich der Tragschalen zusammenwirken. Der Kippwinkel der Tragschalen ist zudem durch die Geometrie dieser mechanischen Bauteile unveränderbar festgelegt, Kippzeitpunkt und das Kippverfahren sind durch die Ausgestaltung der mechanischen Führungen neben dem Fahrweg des Förderers festgelegt.

Es ist auch schon vorgeschlagen worden, eine auf dem Wagen mitfahrende Anordnung eines Kippantriebes in Form eines Elektromotors zu verwenden, der über ein Ritzel mit am Rahmen des Wagens befestigten bogenförmigen Zahnstangen zusammenwirkt. Das Kippen der Tragschale erfolgt durch Ansteuern des sich an den Zahnstangen abstützenden Elektromotors, wodurch der Kipphebel mit der darauf befestigten Tragschale in Kippstellung gebracht werden kann (EP 1 454 856 A1). Durch diese Anordnung wird der Kippantrieb unabhängig von jeglichen Führungsschienen, Kurvenstücken und Steuerrollen am Fahrweg des Förderers, sowie weiteren mechanischen Gestängen und Hebeln, wie sie in den verschiedenster Ausführungen aus dem Stand der Technik bekannt sind.

Andere existierende Kippschalensorter verfügen über starre Aktivierungsmechanismen die sowohl mechanisch als auch elektrisch gesteuert werden. Die Bewegungsübertragungen erfolgen über eng tolerierte Paarungen oder Zahnradmechanismen die aufwendige Produktionsverfahren verlangen oder im Falle von Störungen, hohe Risiken von Beschädigungen mit sich tragen.

Aus der WO 02/057161 ist ferner ein Kippschalenförderer ensprechend dem Oberbegriff von Ansprusch 1 bekannt, bei dem ein Kippen der Tragschale mittels eines Zahnriemens erfolgt.

Aufgabe der vorliegenden Erfindung ist es, einen bekannten Kippschalenförderer so weiter zu bilden, dass bei vereinfachter und somit kostengünstiger Bauweise eine flexible Einleitung der Kippbewegung der Tragschalen möglich wird.

Zur Lösung der Aufgabe wird vorgeschlagen, dass das Zugmittel beidseitig des Antriebes um Umlenkrollen geführt ist. Hierdurch kann der Reibschluss, insbesondere bei kraftschlüssig verwendeten Zugmitteln erhöht werden. Diese Umlenkrollen gestatten einen höheren Umschlingungswinkel um die Räder oder Trommel und erhöhen damit den Reibschluss zur Mitnahme der Tragschale.

In Abkehr von bisherigen Lösungen, bei denen die Kippkraft mechanisch über Stößel- oder Ritzelzahnstangenverbindungen eingeleitet wurde, wird die Kippbewegung nach der Erfindung durch flexible Zugmittel erreicht, die in Folge ihrer Anlenkung an der Unterseite der Tragschale diese nach unten ziehen, sobald eine Zugkraft auf das Zugmittel aufgebracht wird. Das Zugmittel ist vorzugsweise von einem Anlenkpunkt an der Unterseite der Tragachse zu einem zweiten Anlenkpunkt geführt, wobei ein Antrieb vorgesehen ist, um den das Zugmittel geschlungen ist. Dieser Antrieb ist zentrisch unterhalb der Tragschale angeordnet und zieht - abhängig von der Ansteuerung und Drehrichtung des Antriebsmotors - wahlweise das Zugmittel nach der einen oder anderen Seite, je nach dem nach welcher Seite die Tragschale gekippt werden soll. In einer Ausgestaltung der Erfindung ist vorgesehen, dass das Zugmittel formschlüssig mit dem Antrieb verbunden ist und als Kette oder Zahnriemen über ein Ketten- oder Zahnrad antreibbar ist, dessen Drehachse ist Transportrichtung ausgerichtet ist. Bei Bedarf ist es im Rahmen der Erfindung möglich, Kette oder Zahnriemen doppelt, d.h. an beiden Seiten des Wagens vorzusehen, wenn die zu transportierende und zu kippende Last höher ist.

In einer zweiten Variante der Erfindung ist vorgesehen, das Zugmittel kraftschlüssig mit dem Antrieb zu verbinden und als Riemen um eine Riemenscheibe zu führen, dessen Drehachse ebenfalls in Transportrichtung ausgerichtet ist. Die verwendeten Zugmittel in Form von Kette oder Zahnriemen bzw. Riemen sind beispielsweise aus der Automobiltechnik bekannt und dienen dort zur Steuerung von Motor oder zum Antrieb von Anbauteilen.

Kette und Zahnriemen haben vorteilhafter Weise keinen Schlupf, weil sie formschlüssig in ein Zahn- oder Kettenrad eingreifen, während bei Riemenantrieben Vorsorge getroffen werden muss, dass die Riemen auf der Riemenscheibe nicht rutschen. Doch auch dazu sind Lösungen im Stand der Technik bekannt, beispielsweise in dem die Riemen in Form von Keilriemen ausgebildet werden, die in Keilriemenscheiben umgelenkt werden.

Eine andere besonders günstige Lösung der vorliegenden Erfindung ist dadurch gekennzeichnet, dass als kraftschlüssiges Zugmittel ein im wesentlichen der - in Transportrichtung gesehen - Breite der Tragschale entsprechend breiter Gurt verwendet wird, der unterhalb der Tragschale über eine mit ihrer Drehachse in Transportrichtung ausgerichtete Antriebstrommel geführt und mit seinen Enden beidseitig oberhalb der Antriebstrommel an der Unterseite der Tragschale angelenkt ist. Diese Lösung verwendet statt Kettenrad oder Zahnscheibe eine sich über die Breite der Tragschale erstreckende Antriebstrommel, die den Gurt beim Drehen der Antriebstrommel über Reibschluss betätigt. Die Lösung mit dem breiten Gurt hat den besonderen Vorteil, dass der Gurt den Raum unterhalb der Tragschale verschließt und somit sicher verhindert, dass Stückgutteile in die Mechanik zwischen dem Wagen und der Kippvorrichtung der Tragschale fallen und dort Beschädigungen herbeiführen oder selbst beschädigt werden.

Um Längenunterschiede der Riemenstränge zwischen der Ruheposition, bei der sich Tragschale in einer waagerechten Stellung befindet und der Stellung, in der die Tragschale nach rechts oder links gekippt ist, auszugleichen und um eine vorkalkulierte Vorspannung des Systems zu erreichen, wird erfindungsgemäß vorgeschlagen, dass zwischen den Umlenkrollen und der Anlenkung des Zugmittels Spannrollen vorgesehen sind, die in der resultierenden Wirkrichtung der Zugkräfte federnd gelagert sind. Alternativ können die Umlenkrollen selbst als Spannrollen ausgebildet sein.

Ebenfalls mit dem Ziel der Erhöhung des Kraftschlusses zwischen dem Antrieb und dem Zugmittel wird nach einem anderen Merkmal der Erfindung vorgeschlagen, dass das Zugmittel von einer Seite der Tragschale zur anderen Seite der Tragschale S-förmig um die Umlenk- und Antriebsrollen geführt ist. Die Führung des kraftschlüssigen Zugmittels ist erfindungsgemäß vorzugsweise so gewählt, dass ein Umschlingungswinkel des Zugmittels um den Antrieb zwischen 45° und 180° eingehalten wird.

Vorzugsweise wird vorgeschlagen, dass die Umlenkrollen tiefer als der Antrieb angeordnet sind, so dass das Zugmittel mit großem Umschlingungswinkel um den Antrieb geführt werden kann.

Die Erfindung sieht vor, den Antrieb selbst von einem Elektromotor zu speisen, wobei unterschiedliche Antriebe zum Einsatz kommen können. So kann der Elektromotor innerhalb der Trommel im Fall eines Gurtes als Kippantrieb vorgesehen sein; im Fall von Zahnrädern oder Ritzeln bzw. Riemenscheiben können diese auf der Abtriebswelle des Elektromotors angeordnet sein, der dann selbst mit seiner Welle in Transportrichtung des Kippschalen-Sortierförderers ausgerichtet ist.

Ein Positionsgeber am Motor soll die Position der Tragschale stetig ermitteln und eine elektrische Bremse am Motor soll in der Lage sein, die Tragschale in der vorgesehenen Stellung zu halten. Alternativ kann ein selbsthemmendes Getriebe nach Ausschaltung des Motors für die Haltung in der vorgegebenen Position sorgen.

Zusätzliche Überwachungsfunktionen der Zugmittel können Auskunft über deren Status geben und somit den Zeitpunkt anzeigen, zu dem Wartungsmaßnahmen durchzuführen sind.

Die Erfindung ist vorteilhaft, weil sie mit einfachen Mitteln unter Verwendung von Standard- und Normteilen zum einen die Kosten niedrig hält und zum anderen in Folge der verwendeten flexiblen Zugmittel die Geräuschemission auf ein Minimum reduziert. Die einfache überschaubare Lösung senkt die Beschaffungs- wie auch die operativen Kosten wie Strom- und Wartungskosten und stellt damit einen günstigen Beitrag mit der Energieeinsparung dar.

Die Skalierbarkeit des Systems erlaubt die Erstellung einer Produktfamilie für unterschiedliche Anwendungen (vom leichten postalischen Bereich hin bis zur Sortiersystemen für Flughafengepäck) und stellt somit eine Bereicherung der am Markt verfügbaren Techniken dar.

Ein Ausführungsbeispiel der Erfindung wird in der Zeichnung dargestellt und nachfolgend beschrieben. Es zeigt:
- Figur 1: in grobschematischer Darstellung das Funktionsprinzip der Tragschale in ihren Kippstellungen,
- Figur 2: ebenfalls grobschematisch eine Seitenansicht des Wagens mit der Tragschale,
- Figur 3: in perspektivischer Darstellung den Kippantrieb in einer Ausführung der Erfindung,
- Figur 4: eine Ansicht in Transportrichtung des Kippschalen-Sortierförderers auf einen Wagen mit gekippter Tragschale und
- Figur 5: eine perspektivische Darstellung der gekippten Tragschale in einer zweiten Ausführungsform der Erfindung.

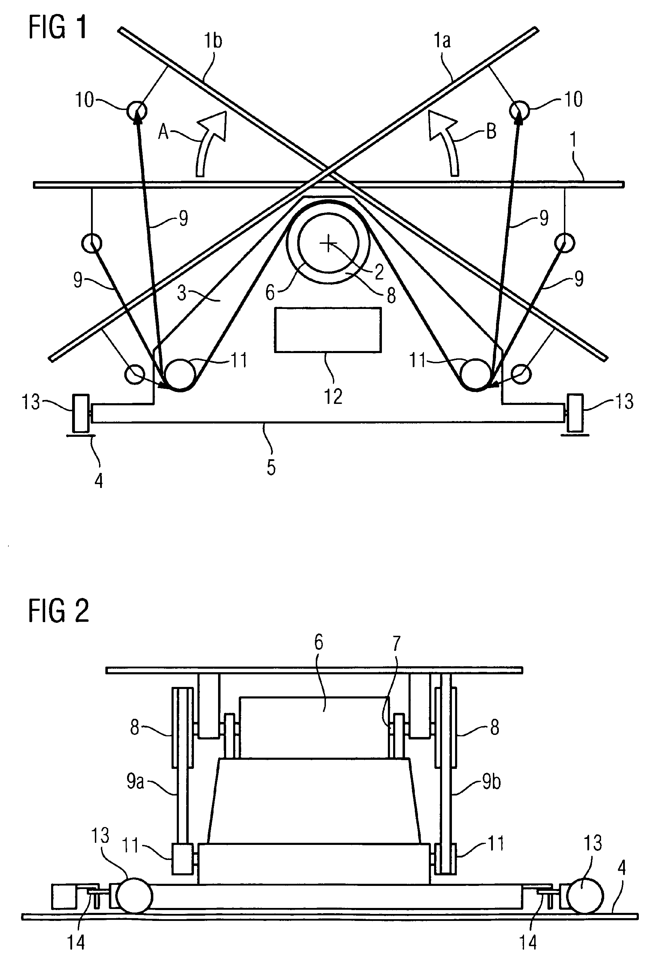

In Figur 1 ist bei 1 die Tragschale eines Kippschalen-Sortierförderers in der Transportstellung (Ausgangsstellung) dargestellt, in der die Tagschale 1 in der horizontalen Position festgelegt ist, in der ein aufgelegtes Stückgut zum Zielort transportiert werden kann. Die Tragschale 1 ist beidseitig um eine Kippachse 2 (die senkrecht zur Zeichnungsebene verläuft) an einem Träger 3 gelagert, der Teil eines auf Fahrschienen 4 verfahrbaren Wagens 5 ist. Zum Verschwenken der Tragschale 1 um die Kippachse 2 ist ein Antrieb vorgesehen, der aus einem Antriebsmotor 6 sowie einem auf dessen Motorwelle 7 angeordneten Zahnrad 8 mit dem darüber geführtem Zugmittel, dem Zahnriemen 9 besteht. Der Zahnriemen 9 ist, wie in Figur 1 gezeigt, bei 10 beidseitig der Längsmittelebene des Wagens 5 an der Unterseite der Tragschale 1 angelenkt, wobei der Zahnriemen 9 von der einen Anlenkung 10 zu der anderen über die Umlenkrollen 11 und die Zahnscheibe 8 geführt ist. Beim Antreiben des Motors 6 in der einen oder anderen Drehrichtung wird die Tragschale 1, sobald die Zugkräfte, die von dem Zahnrad 8 auf den Zahnriemen aufgebracht werden, in Pfeilrichtung A oder B gekippt. In der Zeichnungsfigur sind die beiden Kippstellungen der Tragschale nach rechts und links mit 1a und 1b bezeichnet, der Verlauf des Zahnriemens 9 in den beiden Kippstellungen ist ebenfalls erkennbar. Die Ansteuerung des Motors 6 erfolgt über den auf den Wagen 6 mitgeführten Controller, der mit 12 bezeichnet ist.

In Figur 2 sind die beschriebenen Komponenten der Erfindung in einer Seitenansicht dargestellt. Erkennbar ist die Übertragung der Kippkraft auf zwei Zahnriemen 9a und 9b aufgeteilt, die jeweils über Zahnräder 8 angetrieben werden, die beidseitig auf der Motorwelle 7 des Motors 6 angeordnet sind. Dementsprechend sind auch die Umlenkräder 11 an beiden Enden des Wagens 6 angeordnet, so dass eine symmetrische Krafteinleitung in den Kippantrieb der Tragschalen 1 erfolgt.

Erkennbar in Figur 2 sind die Tragschienen 4 auf denen der Wagen auf Rädern verfahrbar ist. Angedeutet ist auch, wie die Kopplung 14 des Wagens 6 mit den benachbarten Wagen 6 zu einer geschlossenen Wagenkette erfolgt.

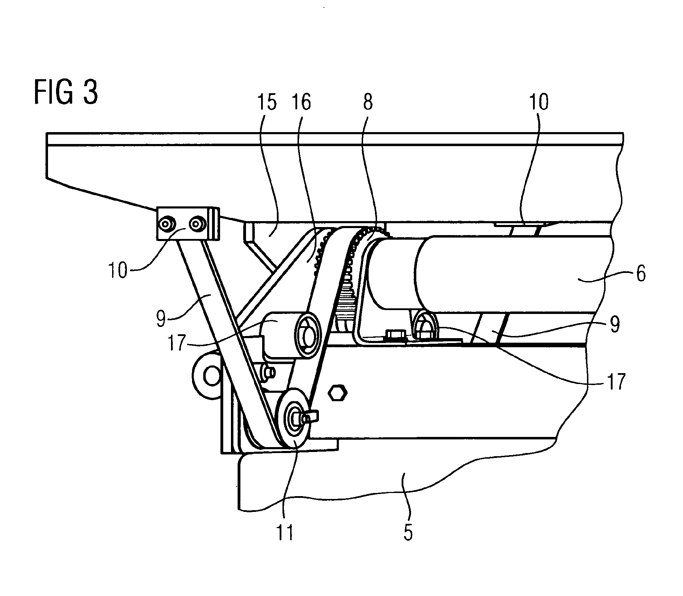

In Figur 3 sind in einer perspektivischen Darstellung des Wagens 5 die Einzelheiten des Kippantriebes schematisch dargestellt. Gleiche Teile sind gleich bezeichnet. Erkennbar ist der Zahnriemen 9 bei 10 an der Tragschale 1 bzw. an deren Unterseite befestigt und von dort aus über die Umlenkrolle 11 zu dem Zahnrad 8 geführt. Der Zahnriemen 9, der in das Zahnrad 8 eingreift umschlingt letzteres und wird zur anderen Seite der senkrechten Mittelebenen des Wagens 5 geführt ist, wo in symmetrischer Anordnung eine zweite Umlenkrolle 11 den Zahnriemen zu der Befestigung 10 auf der anderen Unterseite der Tragschale 1 führt. Der Motor 6 ist am Wagen 5 bei 16 gelagert. In der dargestellten Ausführungsform ist der Motor 6 als Trommelmotor gestaltet, auf dessen Wellenstummel das Zahnrad 8 für den Zahnriemen 9 gelagert ist. Die Drehachse des Motors 6 fällt mit der Kippachse 2 (Figur 1) der Tragschale zusammen, die an der Traverse 15 gelagert ist. Bei 17 sind zusätzliche Umlenkrollen dargestellt, die der Führung des Zahnriemens 9 in gekippter Stellung der Tragschale 1 dienen. Diese Rollen 17 bzw. die Umlenkrollen 11 können jeweils federnd gelagert sein, um Längenunterschiede beim Kippen der Tragschale 1 auszugleichen.

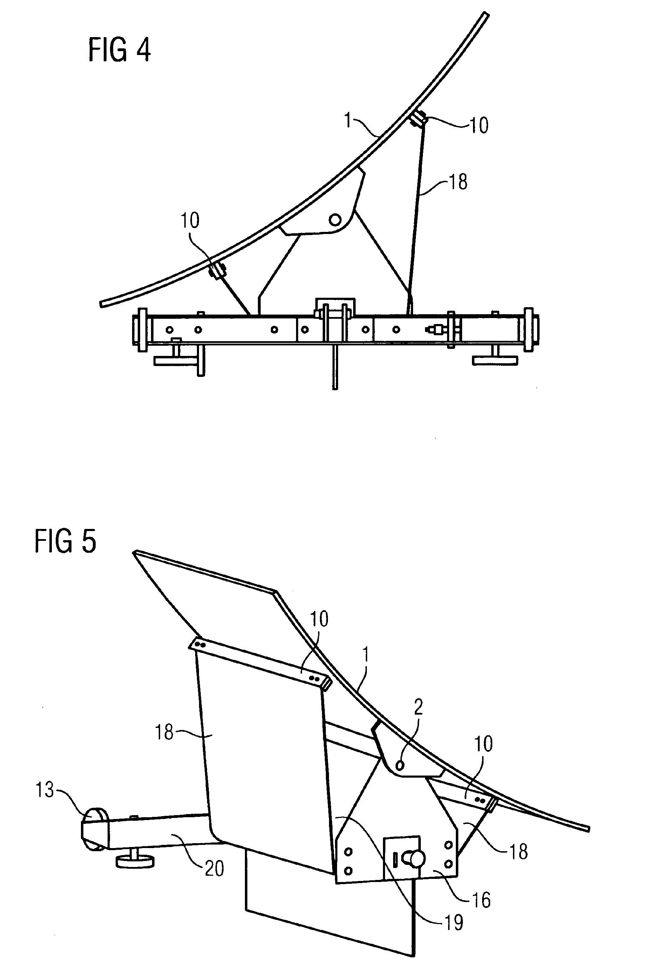

In einer bevorzugten anderen Ausführungsform der Erfindung wird statt eines oder zweier Zahnriemen 9 ein Gurt 18 verwendet, der im Wesentlichen der - in Transportrichtung gesehenen - Breite der Tragschale 1 entspricht. Der Gurt 18 wird um eine Umlenktrommel 19 geführt, die er reibschlüssig umschlingt. In Figur 4 ist die nach links gekippte Stellung der Tragschale 1 in einer in Transportrichtung des Kippschalen-Sortierförderers gerichteten Ansicht dargestellt. Der Gurt 18 ist, wie der Zahnriemen 9 in Figur 3, beidseitig der Kippachse 2 an der Unterseite der Tragschale 1 befestigt und in der Lage, das von der Umlenktrommel 19 aufgebrachte Moment in eine Zugkraft auf das als Gurt 18 ausgebildete Zugmittel umzusetzen.

Erkennbar in Figur 5, die eine perspektivische Darstellung der erfindungsgemäßen Variante darstellt, sind Rahmenteile 20 des Wagens 5 sowie die Traverse 15 der Tragschale 1 mit ihrer Anlenkung an der Kippachse 2 des Systems. Bei diese Lösung wird erkennbar der untere Seitenbereich der Tragschale 1 abgeschlossen und verhindert, dass sich Stückgutteile im System verfangen und dieses blockieren oder beschädigen.

## Patentansprüche

1. Kippschalen-Sortiervorrichtung für Stückgüter, beste end aus zu einem Ring oder Zug aneinander gekoppelten oder einzelne und entlang von Fahrschienen (4) verfahrbaren Wagen (5) mit jeweils mindestens einer darauf angeordneten Tragschale (1), die für die Abgabe von auf der Tragschale (1) aufliegend transportiertem Fördergut mittels eines auf dem Wagen (5) angeordneten Kippantriebes aus einer horizontalen Transportstellung um eine in Fahrtrichtung verlaufende zentrisch unterhalb der Tragschale (1) angeordnete Kippachse (2) beidseitig in jeweils eine Entladestellung schwenkbar ist, wobei als Kippantrieb mindestens ein beidseitig der Kippachse (2) unterhalb der Tragschale (1) angelenktes flexibles kraft- oder formschlüssiges Zugmittel (9, 18) vorgesehen ist, das mit einem Antrieb (6) zum Aufbringen einer in Kipprichtung (A, B) der Tragschale (1) wirkenden Zugkraft in Wirkverbindung steht,
**dadurch gekennzeichnet, dass** das Zugmittel (9, 18 beidseitig des Antriebes (6) um Umlenkrollen (11) geführt ist.

2. Kippschalen-Sortiervorrichtung nach Anspruch 1,
**dadurch gekennzeichnet, dass** das Zugmittel (9, 18) formschlüssig mit dem Antrieb (6) verbunden ist und als Kette oder Zahnriemen (9) über ein Ketten- oder Zahnrad (8) antreibbar ist, dessen Drehachse in Transportrichtung ausgerichtet ist.

3. Kippschalen-Sortiervorrichtung nach Anspruch 1,
**dadurch gekennzeichnet, dass** das Zugmittel kraftschlüssig mit dem Antrieb (6) verbunden ist und als Riemen um eine Riemenscheibe geführt ist, deren Drehachse in Transportrichtung ausgerichtet ist.

4. Kippschalen-Sortiervorrichtung nach Anspruch 1 und 3,
**dadurch gekennzeichnet, dass** als kraftschlüssiges Zugmittel ein im Wesentlichen der - in Transportrichtung gesehenen - Breite der Tragschale (1) entsprechend breiter Gurt (18) verwendet wird, der unterhalb der Tragschale (1) über eine mit ihrer Drehachse in Transportrichtung ausgerichtete Antriebstrommel (19) geführt und mit seinen Enden beidseitig oberhalb der Antriebstrommel (19) an der Unterseite der Tragschale (1) angelenkt ist.

5. Kippschalen-Sortiervorrichtung nach Anspruch 1,
**dadurch gekennzeichnet, dass** das Zugmittel (10) mittels einer Anlenkung (10) an der Unterseite der Tragschale angelenkt ist und dass zwischen den Umlenkrollen (11) und der Anlenkung (10) des Zugmittels Spannrollen (17) vorgesehen sind, die in der resultierenden Wirkrichtung der Zugkräfte federnd gelagert sind.

6. Kippschalen-Sortiervorrichtung nach Anspruch 1 oder 5,
**dadurch gekennzeichnet, dass** die Umlenkrollen (11) selbst als Spannrollen ausgebildet sind.

7. Kippschalen-Sortiervorrichtung nach Anspruch 1 bis 6,
**dadurch gekennzeichnet, dass** das Zugmittel von einer Seite der Tragschale (1) zur anderen Seite der Tragschale (1) S-förmig um die Umlenkrollen (11) und den Antrieb geführt ist.

8. Kippschalen-Sortiervorrichtung nach Anspruch 1 bis 7,
**dadurch gekennzeichnet, dass** mindestens bei kraftschlüssigem Zugmittel ein Umschlingungswinkel des Zugmittels um den Antrieb von zwischen 45° und 180° eingehalten wird.

9. Kippschalen-Sortiervorrichtung nach einem der Ansprüche 1 bis 8,
**dadurch gekennzeichnet,**
**dass** die Umlenkrollen (11) tiefer als der Antrieb (6) angeordnet sind.

10. Kippschalen-Sortiervorrichtung nach einem der Ansprüche 1 bis 9,
**dadurch gekennzeichnet, dass** der Antrieb (6) von einen Elektromotor gespeist ist.

11. Kippschalen-Sortiervorrichtung nach Anspruch 10, **dadurch gekennzeichnet, dass** der Elektromotor zur Ermittlung der Position der Tragschale (1) mit einem Pulsgeber versehen ist.

12. Kippschalen-Sortiervorrichtung nach einem der Ansprüche 1 bis 11,
**dadurch gekennzeichnet, dass** die Tragschale (1) mit Hilfe des Kippantriebes und dessen Steuerung (12) gezielt aus der Horizontalen in eine beliebige Position zwischen der horizontaler Transportstellung und der Entladestellung verschwenkbar und in jeder dieser Positionen vorübergehend festlegbar ist.

13. Kippschalen-Sortiervorrichtung nach Anspruch 12,
**dadurch gekennzeichnet, dass** die Tragschale (1) über eine elektrische Bremse in der vorgegebenen Stellung gehalten wird.

14. Kippschalen-Sortiervorrichtung nach Anspruch 2 und 12,
**dadurch gekennzeichnet, dass** die Tragschale (1) über ein selbsthemmendes Getriebe zwischen Motor und Zahnrad (8) in der vorgegebenen Stellung gehalten wird.

## Claims

1. Tilt tray sorter apparatus for piece goods, composed of wagons (5) which are coupled to one another into a ring or train or are individual and are movable along running rails (4) and which each have at least one carrying tray (1) which is arranged thereon and which, for the discharge of conveyable stock transported so as to lie on the carrying tray (1), can be pivoted, by means of a tilting drive arranged on the wagon (5), out of a horizontal transport position, about a tilt axis (2) running in the direction of travel and arranged centrally underneath the carrying tray (1), on both sides in each case into an unloading position, the tilting drive provided being at least one flexible nonpositive or positive traction means (9, 18) which is articulated on both sides of the tilt axis (2) underneath the carrying tray (1) and which is operatively connected to a drive (6) for applying a traction force acting in the tilting direction (A, B) of the carrying tray (1), **characterized in that** the traction means (9, 18) is guided around deflecting rollers (11) on both sides of the drive (6).

2. Tilt tray sorter apparatus according to Claim 1, **characterized in that** the traction means (9, 18) is connected positively to the drive (6) and can be driven as chain or toothed belt (9) via a chain wheel or gearwheel (8), the axis of rotation of which is oriented in the transport direction.

3. Tilt tray sorter apparatus according to Claim 1, **characterized in that** the traction means is connected nonpositively to the drive (6) and is guided as a belt around a pulley, the axis of rotation of which is oriented in the transport direction.

4. Tilt tray sorter apparatus according to Claims 1 and 3, **characterized in that** the nonpositive traction means used is a strap (18) which has a width corresponding essentially to the width of the carrying tray (1), as seen in the transport direction, and which is guided underneath the carrying tray (1) via a drive drum (19) oriented with its axis of rotation in the transport direction and which is articulated at its ends on both sides, above the drive drum (19), on the underside of the carrying tray (1).

5. Tilt tray sorter apparatus according to Claim 1, **characterized in that** the traction means (9, 18) is articulated on the underside of the carrying tray by means of an articulation (10) and **in that**, between the deflecting rollers (11) and the articulation (10) of the traction means, tension rollers (17) are provided which are mounted resiliently in the resulting direction of action of the traction forces.

6. Tilt tray sorter apparatus according to Claim 1 or 5, **characterized in that** the deflecting rollers (11) themselves are designed as tension rollers.

7. Tilt tray sorter apparatus according to Claims 1 to 6, **characterized in that** the traction means is guided from one side of the carrying tray (1) to the other side of the carrying tray (1) in an S-shaped manner around the deflecting rollers (11) and the drive.

8. Tilt tray sorter apparatus according to Claims 1 to 7, **characterized in that**, at least in the case of nonpositive traction means, a looping angle of the traction means around the drive of between 45° and 180° is maintained.

9. Tilt tray sorter apparatus according to one of Claims 1 to 8, **characterized in that** the deflecting rollers (11) are arranged at a lower level than the drive (6).

10. Tilt tray sorter apparatus according to one of Claims 1 to 9, **characterized in that** the drive (6) is fed from an electric motor.

11. Tilt tray sorter apparatus according to Claim 10, **characterized in that** the electric motor is provided with a pulse generator for determining the position of the carrying tray (1).

12. Tilt tray sorter apparatus according to one of Claims 1 to 11, **characterized in that** the carrying tray (1) can be pivoted with the aid of the tilting drive and its control (12) in a directed manner out of the horizontal into any position between the horizontal transport position and the unloading position and can be fixed temporarily in each of these positions.

13. Tilt tray sorter apparatus according to Claim 12, **characterized in that** the carrying tray (1) is held in the predetermined position via an electric brake.

14. Tilt tray sorter apparatus according to Claim 2 and 12, **characterized in that** the carrying tray (1) is held in the predetermined position via a selflocking gear between the motor and gearwheel (8).

## Revendications

1. Dispositif de tri à bennes basculantes pour des colis, constitué de chariots ( 5 ) individuels ou attelés l'un à l'autre en un groupe ou en un train et pouvant être déplacé sur des rails ( 4 ) de roulement, en ayant respectivement au moins une benne ( 1 ) porteuse qui y est montée et qui, pour la distribution de produit transporté mis sur la benne ( 1 ) porteuse, peut, au moyen d'un entraînement en basculement monté sur le chariot ( 5 ), pivoter d'une position de transport horizontal autour d'un axe ( 2 ) de basculement disposé sous la benne ( 1 ) porteuse de manière centrée en s'étendant dans la direction de déplacement, des deux côtés dans respectivement une position de déchargement, dans lequel il est prévu, comme entraînement en basculement, au moins un moyen ( 9, 18 ) de traction souple à complémentarité de force ou de forme articulée des deux côtés de l'axe ( 2 ) de basculement sous la benne ( 1 ) porteuse, moyen de traction qui est en liaison d'action avec un entraînement ( 9 ) pour appliquer une force de traction agissant dans une direction ( A, B ) de basculement de la benne ( 1 ) porteuse, **caractérisé en ce que** le moyen ( 9, 18 ) de traction passe sur des galets ( 11 ) de renvoi des deux côtés de l'entraînement ( 6 ).

2. Dispositif de tri à bennes basculantes suivant la revendication 1, **caractérisé en ce que** le moyen ( 9, 18 ) de traction est relié à complémentarité de forme à l'entraînement ( 6 ) et peut être entraîné sous la forme d'une chaîne ou d'une courroie ( 9 ) dentée par une roue ( 8 ) de chaîne ou par une roue ( 8 ) dentée, dont l'axe de rotation est dirigé dans une direction de transport.

3. Dispositif de tri à bennes basculantes suivant la revendication 1,
**caractérisé en ce que** le moyen de traction relié à complémentarité de force avec l'entraînement ( 6 ) et passe en tant que courroie autour d'une poulie, dont l'axe de rotation est dirigée dans une direction de transport.

4. Dispositif de tri à bennes basculantes suivant la revendication 1 et 3,
**caractérisé en ce que**, comme moyen de traction à complémentarité de force, est utilisée une courroie ( 18 ) d'une largeur correspondant sensiblement à la largeur considérée dans la direction de transport, de la benne ( 1 ) porteuse, courroie qui passe en dessous de la benne ( 1 ) porteuse sur un tambour ( 19 ) d'entraînement, dont l'axe de rotation est dirigé dans la direction de transport et qui est articulé au côté inférieur de la benne ( 1 ) porteuse par ses extrémités des deux côtés au-dessus du tambour ( 19 ) d'entraînement.

5. Dispositif de tri à bennes basculantes suivant la revendication 1,
**caractérisé en ce que** le moyen ( 10 ) de traction est articulé au moyen d'une articulation ( 10 ) au côté inférieur de la benne porteuse et **en ce qu'**il est prévu entre les galets ( 11 ) de renvoi et l'articulation ( 10 ) du moyen de traction des galets ( 17 ) tendeurs qui sont montés en donnant de l'élasticité dans la direction d'action résultante des forces de traction.

6. Dispositif de tri à bennes basculantes suivant la revendication 1 ou 5,
**caractérisé en ce que** les galets de renvoi sont constitués eux-mêmes en galets tendeurs.

7. Dispositif de tri à bennes basculantes suivant la revendication 1 à 6,
**caractérisé en ce que** le moyen de traction passe en forme de S autour des galets ( 11 ) de renvoi et de l'entraînement d'un côté de la benne ( 1 ) porteuse à l'autre côté de la benne ( 1 ) porteuse.

8. Dispositif de tri à bennes basculantes suivant la revendication 1 à 7,
**caractérisé en ce qu'**au moins pour un moyen de traction à complémentarité de force un angle d'enroulement du moyen de traction autour de l'entraînement est maintenu entre 45° et 180°.

9. Dispositif de tri à bennes basculantes suivant l'une des revendications 1 à 8,
**caractérisé en ce que** les galets ( 11 ) de renvoi sont montés plus bas que l'entraînement ( 6 ).

10. Dispositif de tri à bennes basculantes suivant l'une des revendications 1 à 9,
**caractérisé en ce que** l'entraînement ( 6 ) est alimenté par un moteur électrique.

11. Dispositif de tri à bennes basculantes suivant la revendication 10,
**caractérisé en ce que** le moteur électrique est pourvu d'un émetteur d'impulsions pour la détermination de la position de la benne ( 1 ) porteuse.

12. Dispositif de tri à bennes basculantes suivant l'une des revendications 1 à 11,
**caractérisé en ce que** la benne ( 11 ) porteuse peut, à l'aide de l'entraînement en basculement et de sa commande ( 12 ), être basculée à dessein de l'horizontal à une position quelconque entre la position de transport horizontale et la position de déchargement et peut être fixée temporairement dans chacune de ces positions.

13. Dispositif de tri à bennes basculantes suivant la revendication 12,
caractérisé en ce la benne ( 1 ) porteuse peut être maintenue dans la position prescrite par un frein électrique.

14. Dispositif de tri à bennes basculantes suivant la revendication 2 à 12,
**caractérisé en ce que** la benne ( 1 ) porteuse est maintenue dans la position prescrite par un engrenage autoblocant entre le moteur et une roue ( 8 ) dentée.
